# EUROPÄISCHE PATENTSCHRIFT

(11) **EP 3 953 088 B1**
(45) Veröffentlichungstag und Bekanntmachung des Hinweises auf die Patenterteilung: **29.03.2023**
(21) Anmeldenummer: 20721428.9
(22) Anmeldetag: 26.03.2020
(51) Int. Cl.: B27B 27/08, B23D 47/04, B23Q 3/00

(54) **WERKZEUGMASCHINE MIT SEITENANLAGEKÖRPER UND WIDERLAGERKÖRPER**
MACHINE TOOL COMPRISING A LATERAL CONTACT BODY AND AN ABUTMENT BODY
MACHINE-OUTIL AVEC CORPS D'APPUI LATÉRAL ET CORPS DE BUTÉE

(30) Priorität: 12.04.2019 US 201962833369 P
(43) Veröffentlichungstag der Anmeldung: 16.02.2022
(73) Patentinhaber: Festool GmbH, 73240 Wendlingen am Neckar (DE)
(72) Erfinder: CAPACCIOLI, David, Plympton, MA 02367 (US); HÖLDERLE, Rüdiger, 73101 Aichelberg (DE)
(74) Vertreter: Patentanwälte Bregenzer und Reule Partnerschaftsgesellschaft mbB
(86) Internationale Anmeldenummer: PCT/EP2020/058607
(87) Internationale Veröffentlichungsnummer: WO 2020/207818

(56) Entgegenhaltungen:
- WO-A1-2012/019005
- DE-C1- 3 820 526
- DE-U1-202011 051 127

## Beschreibung

Die Erfindung betrifft eine Werkzeugmaschine, insbesondere halbstationäre oder mobile Werkzeugmaschine und/oder Sägemaschine, zur Bearbeitung von Werkstücken anhand eines Arbeitswerkzeugs, insbesondere eines Trennwerkzeugs oder eines Sägewerkzeugs, gemäß dem Oberbegriff des Anspruchs 1.

Eine derartige Werkzeugmaschine ist beispielsweise in DE202011051127U1 erläutert.

Weitere Werkzeugmaschinen in Gestalt von sogenannten Kappsägen sind beispielsweise in US 8,020,477 B2 oder US 8,122,803 B2 erläutert. Der Widerlagerkörper ist in einer Stützstellung oberhalb der Auflagefläche der Maschinenbasis angeordnet, sodass er das zu bearbeitende Werkstück der Auflagefläche gegenüberliegend abstützt. Somit können beispielsweise Profilleisten, die zur Montage in Raum-Innenecken vorgesehen sind, an der Seitenanlagefläche anliegen und in einer Schrägstellung bezüglich der Seitenanlagefläche und der Auflagefläche in Position gehalten werden, um sogenannte Crown-Molding-Schnitte durchzuführen. Die in US 8,020,477 B2 beschriebenen Widerlagerkörper sind beispielsweise in Längsführungen an den Seitenanschlagkörper oder Seitenanlagekörper geführt und stützen das zu bearbeitende Werkstück etwa punktförmig ab. Damit das Werkstück optimal abgestützt werden kann, sind in einem Längsabstand bezüglich der Längsachse zwei Widerlagerkörper vorgesehen.

In US 8,122,803 B2 ist zwar nur ein Widerlagerkörper pro Seitenanlagekörper vorgesehen, der jedoch gegenüber der in US 8,020,477 B2 beschriebenen Technologie den Vorteil hat, dass sich seine Widerlagerfläche entlang der Längsachse um ein gewisses Maß erstreckt, sodass das zu bearbeitende Werkstück über eine größere Länge bezüglich der Längsachse an den Widerlagerkörper abgestützt ist als bei den Widerlagerkörpern gemäß US 8,020,477 B2. Weiterer relevanter Stand der Technik ist in der WO2012/019005A offenbart.

Die Handhabung der Widerlagerkörper oder deren Abstützung des zu bearbeitenden Werkstücks ist jedoch bei beiden erläuterten Konzepten nicht optimal.

Es ist daher die Aufgabe der vorliegenden Erfindung, bei einer Werkzeugmaschine der eingangs genannten Art eine verbesserte Abstützung des Werkstücks bereitzustellen.

Zur Lösung der Aufgabe ist eine Werkzeugmaschine gemäß der technischen Lehre des Anspruchs 1 vorgesehen.

Das erfindungsgemäße Konzept sieht also vor, dass der mindestens eine Widerlagerkörper oder gegebenenfalls auch mehrere Widerlagerkörper nicht ortsfest bezüglich der Längsachse der Seitenanlagefläche angeordnet sind, sondern verstellbar. Somit kann der Widerlagerkörper bezüglich des Werkstücks und/oder des Arbeitswerkzeuges jeweils in eine optimale Position gebracht werden. Der Widerlagerkörper kann also beispielsweise zur Flachseite eines Sägeblatts hin oder von diesem weg entlang der Linearachse verstellt werden. Insbesondere wenn längere oder kürzere Werkstücke an der Seitenanlagefläche anliegen, kann die Position des Widerlagerkörpers bezüglich der Längsachse optimal eingestellt werden. Es können für den mindestens einen Widerlagerkörper zwei oder weitere Längspositionen bezüglich der Längsachse vorgesehen sein, beispielsweise eine feste erste und eine feste zweite Längsposition, aber auch weitere Längspositionen. Weiterhin ist es möglich, dass mehrere Widerlagerkörper vorgesehen sind, beispielsweise zwei Widerlagerkörper. Es ist möglich, dass jeweils ein Widerlagerkörper einer Seitenanschlagfläche zugeordnet ist oder dass einer Seitenanschlagfläche mehrere Widerlagerkörper und somit mehrere, beispielsweise zwei, Widerlagerflächen zugeordnet sind.

Man kann den Widerlagerkörper auch als Niederhalter oder Niederhalter-Körper bezeichnen, der das zu bearbeitende Werkstück in Bezug auf die Auflagefläche sozusagen nieder hält. Der Widerlagerkörper kann aber auch als Widerlager-Anschlagkörper bezeichnet werden. Ebenso ist es möglich, den mindestens einen Seitenanlagekörper als Seitenanschlagkörper zu bezeichnen.

Die Werkzeugmaschine ist zweckmäßigerweise eine mobile, jedoch stationär einsetzbare Werkzeugmaschine. Insbesondere ist es vorteilhaft, wenn die Werkzeugmaschine zwar transportierbar ist, d.h. ein Gewicht von weniger als 60-80 kg aufweist, für einen Sägebetrieb oder eine sonstige Bearbeitung des Werkstücks aber auf einem Untergrund abgestellt werden kann. Das Werkstück ist zur Bearbeitung durch das Arbeitswerkzeug auf die Auflagefläche auflegbar und an die mindestens eine Seitenanlagefläche anlegbar, während der Trennschnitt oder Sägeschnitt oder eine sonstige Werkstückbearbeitung, beispielsweise eine Bohrung oder Fräsarbeit, durchgeführt wird. Zugleich stützt mindestens eine Widerlagerfläche des Widerlagerkörpers das Werkstück mit einer Kraftrichtung zu der Anlagefläche hin ab.

Eine bevorzugte Ausführungsform der Erfindung sieht vor, dass die Werkzeugmaschine eine Tischkreissäge, eine Kappsäge, eine Zugsäge oder eine Kapp-Zug-Säge ist. Insbesondere ist es vorteilhaft, wenn die Werkzeugmaschine eine Sägemaschine für einen halbstationären Betrieb ist, d.h. dass sie beispielsweise auf Baustellen mitgenommen und dort betrieben werden kann.

Prinzipiell möglich ist es, dass der mindestens eine Widerlagerkörper beispielsweise direkt an der Maschinenbasis oder der Auflagefläche befestigt oder befestigbar oder gelagert ist. Somit kann der Widerlagerkörper beispielsweise unabhängig von dem Seitenanlagekörper bezüglich der Längsachse verstellbar sein.

Ein bevorzugtes Konzept sieht jedoch vor, dass der Widerlagerkörper an dem mindestens einen Seitenanlagekörper angeordnet ist oder anordenbar ist.

Somit ist beispielsweise die Widerlagerfläche bezüglich der Seitenanlagefläche optimal angeordnet.

Ferner kann der Widerlagerkörper beispielsweise zusammen mit dem Seitenanlagekörper zwischen den Längspositionen entlang der Längsachse verstellbar sein. Wenn also der Seitenanlagekörper in einer anderen Längspositionen entlang der Längsachse an der Maschinenbasis befestigt wird, ändert sich zugleich die Längsposition des Widerlagerkörpers, sodass dieser besonders günstig relativ zu der Maschinenbasis oder der Auflagefläche positioniert ist.

Der Widerlagerkörper kann ortsfest an dem Seitenanlagekörper angeordnet sein. Beispielsweise kann an dem Seitenanlagekörper ein Widerlagervorsprung angeordnet sein, der den Widerlagerkörper bildet.

Bevorzugt ist es, wenn der mindestens eine Widerlagerkörper an dem jeweiligen Seitenanlagekörper anhand einer Befestigungseinrichtung lösbar befestigt und/oder beweglich gelagert ist. Der Widerlagerkörper kann also beispielsweise von dem Seitenanlagekörper entfernt werden oder an dieser montiert werden.

Die Halteeinrichtung kann dediziert zum Befestigen des Widerlagerkörpers an der Maschinenbasis vorgesehen sein, d. h. dass sie nur den Widerlagerkörper bezüglich der Maschinenbasis lösbar fixiert oder lagert.

Bevorzugt ist es jedoch, wenn die Halteeinrichtung eine Halteeinrichtung zum Halten des mindestens einen Seitenanschlagkörpers an der Maschinenbasis ist oder aufweist, sodass der Widerlagerkörper an der Maschinenbasis in den mindestens zwei Längspositionen bezüglich der Längsachse durch Verstellung des Seitenanschlagkörpers lösbar befestigbar ist. Dabei ist es möglich, dass der Widerlagerkörper zusammen mit dem Seitenanschlagkörper zwischen den Längspositionen verstellbar ist. Dies ermöglicht eine besonders einfache Handhabung. Es ist aber auch möglich, dass der Seitenanlagekörper ohne den daran montierten Widerlagerkörper zwischen den Längspositionen verstellbar ist und der Widerlagerkörper dann, wenn der Seitenanlagekörper eine jeweilige Längspositionen eingenommen hat, an dem Seitenanlagekörper befestigt wird. In beiden Szenarien ist es möglich, dass sozusagen durch Verstellung des Seitenanschlagkörpers bezüglich der Maschinenbasis entlang der Längsachse auch die Position des Widerlagerkörpers bezüglich der Längsachse veränderbar ist. Wenn also beispielsweise längere Werkstücke zu bearbeiten sind, kann der Seitenanschlagkörper in einem größeren Abstand zu dem Arbeitswerkzeug bezüglich der Längsachse an der Maschinenbasis festgelegt werden, als bei kürzeren Werkstücken. Zugleich ist die Längsposition des Widerlagerkörpers bezüglich der Längsachse veränderbar, sodass dieser in Bezug auf das kürzere Werkstück und auf das längere Werkstück optimal bezüglich der Längsachse positioniert ist und das Werkstück jeweils optimal abstützen kann.

Die Halteeinrichtung weist zweckmäßigerweise eine Basis-Seitenanlagefläche auf, die mit der Seitenanlagefläche des Seitenanlagekörpers fluchtet, wenn der Seitenanlagekörper an der Halteeinrichtung montiert ist. Somit steht beispielsweise die Basis-Seitenanlagefläche vor die Auflagefläche ortsfest vor. Die Basis-Seitenanlagefläche wird sozusagen durch die Seitenanlagefläche des Seitenanlagekörpers in Bezug auf eine sich von der Auflagefläche weg erstreckende Achse, im Betrieb beispielsweise vertikale Achse, verlängert.

Es ist vorteilhaft vorgesehen, dass die Halteeinrichtung Klemmmittel zum Verklemmen des mindestens einen Seitenanlagekörpers oder des mindestens einen Widerlagerkörpers bezüglich der Maschinenbasis und/oder Formschlusskonturen zum formschlüssigen Halten des mindestens einen Seitenanlagekörpers oder des mindestens einen Widerlagerkörpers bezüglich der Maschinenbasis aufweist.

Eine Klemmeinrichtung ermöglicht beispielsweise die Befestigung des Widerlagerkörpers oder Seitenanlagekörpers in mehreren Längspositionen bezüglich der Längsachse, insbesondere eine stufenlose Verstellung des Widerlagerkörpers bezüglich der Längsachse. Die Formschlusskonturen umfassen beispielsweise ineinander eingreifende Hintergreif-Konturen, Nuten und Nutvorsprünge, Haken und Hakenaufnahmen an den jeweils aneinander zu befestigenden Komponenten, beispielsweise an dem Seitenanlagekörper und der Maschinenbasis oder an dem Widerlagerkörper und der Maschinenbasis.

Zur Betätigung zwischen einer Fixierstellung, in der der jeweilige Seitenanlagekörper oder Widerlagerkörper bezüglich der Auflagefläche ortsfest fixiert ist, und einer Lösestellung, in der der Seitenanlagekörper oder Widerlagerkörper bezüglich der Auflagefläche beweglich, insbesondere von der Auflagefläche entfernbar, ist, weist die Halteeinrichtung vorzugsweise Betätigungsmittel, insbesondere Schraubmittel, einen oder mehrere Hebel oder dergleichen auf.

Die Halteeinrichtung weist zweckmäßigerweise eine Linearführung zu einem linearen Verstellen des mindestens einen Seitenanlagekörpers und/oder des mindestens einen Widerlagerkörpers entlang der Längsachse auf. Die Linearführung umfasst beispielsweise eine Führungsnut, in die ein Führungsvorsprung eingreift. Die Führungsnut und/oder der Führungsvorsprung erstrecken sich beispielsweise parallel zu der Längsachse. Es kann vorgesehen sein, dass mindestens zwei Führungsvorsprünge und/oder mindestens zwei Führungsnuten vorgesehen sind, die entlang einer Führungsachse, die parallel zur Längsachse verläuft, verlaufen und einen Längsabstand bezüglich der Führungsachse aufweisen. Möglich sind also ein Führungsvorsprung und/oder eine Führungsnut, die in Bezug auf die Führungsachse durchgängig sind, aber auch beispielsweise segmentierte Führungsvorsprünge oder Führungsnuten.

Die Seitenanlagefläche des mindestens einen Seitenanlagekörpers kann entlang der Längsachse eine identische Höhenerstreckung in Bezug auf eine Höhenachse aufweisen, die zu der Längsachse winkelig ist. Mithin kann also die Seitenanlagefläche über die gesamte Länge des Seitenanlagekörpers entlang der Längsachse gleich hoch sein.

Ein bevorzugtes Konzept sieht jedoch einen größeren Freiraum für das Arbeitswerkzeug an einem nachfolgend als Werkzeugabschnitt bezeichneten Abschnitt des Seitenanlagekörpers vor, der näher bei dem Arbeitswerkzeug angeordnet ist. Somit kann beispielsweise das Arbeitswerkzeug in einer Achse quer zu der Längsachse der Seitenanlagefläche schräg geneigt werden, insbesondere zur Herstellung von Schrägschnitten. Erfindungsgemäß ist vorgesehen, dass die Seitenanlagefläche des mindestens einen Seitenanlagekörpers einen Stützabschnitt und einen Werkzeugabschnitt aufweist, wobei die Seitenanlagefläche im Bereich des Stützabschnitts weiter vor die Auflagefläche vorsteht als im Bereich des Werkzeugabschnitts, der zur Bereitstellung eines größeren Freiraums für das Arbeitswerkzeug vorgesehen ist. Die vorgenannten Erläuterungen beziehen sich auf einen Zustand, wenn der Seitenanlagekörper an der Maschinenbasis befestigt ist. Beispielsweise hat der Seitenanlagekörper an einander entgegengesetzten Längsendbereichen bezüglich der Längsachse unterschiedliche Höhenerstreckungen in Bezug auf eine Höhenachse, die zur Längsachse winkelig ist. Es ist möglich, dass der Seitenanlagekörper beispielsweise zwischen seinen Längsenden bezüglich der Längsachse eine Stufe und/oder einen Schrägverlauf an einer von der Auflagefläche abgewandten oder zu der Auflagefläche entgegengesetzten Seite, insbesondere Schmalseite, aufweist.

Es ist vorteilhaft vorgesehen, dass der mindestens eine Widerlagerkörper im Bereich des Stützabschnitts angeordnet oder anordenbar ist und der mindestens eine Seitenanlagekörper bezüglich der Maschinenbasis und/oder bezüglich der Längsachse zwischen einer ersten Betriebsstellung, in der der Werkzeugabschnitt näher bei dem Arbeitswerkzeug angeordnet ist als der Stützabschnitt, und einer zweiten Betriebsstellung verstellbar ist, in der der Stützabschnitt näher bei dem Arbeitswerkzeug angeordnet ist als der Werkzeugabschnitt. Die erste Betriebsstellung kann beispielsweise eine Betriebsstellung sein, bei der die Werkzeugmaschine ohne den mindestens einen Widerlagerkörper betrieben wird, während die zweite Betriebsstellung diejenige ist, bei der der Widerlagerkörper an der Werkzeugmaschine angeordnet ist.

Beispielsweise ist es vorteilhaft, wenn die Werkzeugmaschine mindestens zwei Seitenanlagekörper aufweist, die an einander entgegengesetzten Seiten des Arbeitswerkzeugs angeordnet oder anordenbar sind. Wenn die beiden Seitenanlagekörper lösbar mit der Werkzeugmaschine, insbesondere deren Maschinenbasis, verbindbar sind, kann der Bediener die Seitenanlagekörper zwischen der ersten und der zweiten Betriebsstellung verstellen, wobei ein in Bezug auf die Längsachse zunächst links neben dem Arbeitswerkzeug angeordneter Seitenanlagekörper und ein in Bezug auf die Längsachse zunächst rechts neben dem Arbeitswerkzeuge angeordneter Seitenanlagekörper zur Einnahme der ersten Betriebsstellung und der zweiten Betriebsstellung vertauschbar sind.

Ein bevorzugtes Konzept sieht vor, dass jeder Seitenanlagekörper jeweils anhand einer Halteeinrichtung in mindestens zwei Längspositionen bezüglich der Längsachse an der Maschinenbasis lösbar befestigbar ist. Somit ist mit jedem der Seitenanlagekörper die Verstellung des ihm zugeordneten mindestens einen Widerlagerkörpers entlang der Längsachse realisierbar.

Der mindestens eine Widerlagerkörper kann anhand der ihm zugeordneten Halteeinrichtung zwischen mindestens zwei Längspositionen entlang der Längsachse bezüglich der Auflagefläche verstellbar sein. Eine weitere Verstellbarkeit des mindestens einen Widerlagerkörpers zwischen mindestens zwei Längspositionen entlang der Längsachse bezüglich der Auflagefläche ergibt sich vorteilhaft durch die Befestigungseinrichtung, anhand derer der mindestens eine Widerlagerkörper an dem jeweiligen Seitenanlagekörper lösbar befestigt und/oder beweglich gelagert ist. Somit kann der mindestens eine Widerlagerkörper anhand der Halteeinrichtung und/oder der Befestigungseinrichtung bezüglich der Auflagefläche in zwei oder mehreren Längspositionen entlang der Längsachse verstellbar sein.

Vorteilhaft ist vorgesehen, dass die Werkzeugmaschine mindestens zwei Seitenanlagekörper aufweist. Die Seitenanlagekörper sind vorteilhaft an einander entgegengesetzten Seiten des Arbeitswerkzeugs angeordnet oder anordenbar. Vorteilhaft sind beide Seitenanlagekörper bezüglich der Maschinenbasis verstellbar, wobei es möglich wäre, dass einer der Seitenanlagekörper beispielsweise ortsfest bezüglich der Auflagefläche angeordnet ist. Bevorzugt ist es, wenn jeder Seitenanlagekörper zu dem Arbeitswerkzeug hin oder von diesem weg verstellbar ist.

Vorteilhaft ist vorgesehen, dass die Widerlagerfläche des mindestens einen Widerlagerkörpers oder der Widerlagerkörper als Ganzes anhand einer Befestigungseinrichtung ortsfest an einer bezüglich der Auflagefläche ortsfesten Komponente der Werkzeugmaschine, insbesondere dem mindestens einen Seitenanlagekörper, in mindestens einem Höhenabstand, vorzugsweise mindestens zwei voneinander verschiedenen Höhenabständen, bezüglich der Auflagefläche fixierbar ist, wobei sich der Höhenabstand entlang einer Höhenachse erstreckt, die quer, insbesondere rechtwinkelig, zu der Auflagefläche verläuft. Ohne weiteres möglich ist aber auch, dass der Widerlagerkörper anhand der Befestigungseinrichtung mit einer anderen Komponente der Werkzeugmaschine als dem Seitenanlagekörper, beispielsweise mit der Maschinenbasis, lösbar verbunden oder verbindbar ist. Somit ist zum Beispiel eine Anpassung des Abstands oder Höhenabstand zwischen der Widerlagerfläche und der Auflagefläche möglich, um das Werkstück sandwichartig zwischen den beiden Flächen zu halten.

Die Befestigungseinrichtung umfasst beispielsweise Klemmmittel zum Verklemmen des Widerlagerkörpers mit der ortsfesten Komponente der Werkzeugmaschine, Schraubmittel zum Verschrauben mit der ortsfesten Komponente oder Anschrauben des Widerlagerkörpers an die ortsfeste Komponente oder dergleichen. Weiterhin vorteilhaft ist es, wenn die Befestigungseinrichtung Formschlusskonturen zum formschlüssigen Halt des Widerlagerkörpers bezüglich der ortsfesten Komponente, beispielsweise mindestens einen Formschlussvorsprung und mindestens eine Formschlussaufnahme, die ineinander eingreifen, aufweist.

Ein vorteilhaftes Konzept sieht vor, dass die Befestigungseinrichtung ein Lager, insbesondere ein Linearlager und/oder eine Linearführung, zum Verstellen des mindestens einen Widerlagerkörpers, insbesondere entlang einer zu der Widerlagerfläche quer orientierten, insbesondere rechtwinkeligen, Verstellachse, zwischen mindestens zwei Höhenabständen aufweist, in denen die Widerlagerfläche unterschiedliche Abstände zu der Auflagefläche für das Werkstück aufweist. Das Lager kann beispielsweise ein Schiebelager oder Linearlager sein, aber auch ein Schwenklager oder Drehlager. Kombinationen von Schiebelager und Drehlager sind ohne weiteres möglich. Bevorzugt ist jedoch eine lineare Lagerung des Widerlagerkörpers und somit dessen Widerlagerfläche.

Vorteilhaft sind beispielsweise zwei lineare Lagerungen und/oder zwei lineare Führungen vorhanden, nämlich einerseits eine Linearführung bezüglich der Längsachse und eine Linearführung entlang der Verstellachse, sodass die Widerlagerfläche optimal in Bezug auf die Längsposition entlang der Längsachse der Seitenanlagefläche als auch in Bezug auf die Verstellachse, d. h. den Abstand zwischen der Widerlagerfläche und der Auflagefläche der Maschinenbasis einstellbar ist.

Bei dem vorgenannten Lager, insbesondere dem Linearlager oder der Linearführung, aber auch bei einem Schwenklager, ist es vorteilhaft, wenn die Befestigungseinrichtung einen Bolzenkörper umfasst, der eine Lagerausnehmung, insbesondere Längsausnehmung, des Lagers durchsetzt. Der Bolzenkörper kann beispielsweise gleichzeitig Bestandteil der nachfolgend erläuterten Klemmmittel sein. Der Bolzenkörper kann beispielsweise eine Lagerachse eines Schwenklagers bilden. Der Bolzenkörper kann aber auch einen Führungskörper bilden, an dem der Widerlagerkörper geführt ist, beispielsweise linear geführt ist.

Bevorzugt ist es, wenn die Befestigungseinrichtung einen Bolzenkörper aufweist, der einen Bestandteil von Klemmmitteln zum Verklemmen des Widerlagerkörpers mit einer bezüglich der Auflagefläche ortsfesten Komponente der Werkzeugmaschine bildet.

An dem Bolzenkörper ist beispielsweise ein Bedienelement, insbesondere ein Handrad, zum Ergreifen durch einen Bediener angeordnet, sodass der Bediener den Bolzenkörper drehbetätigen kann. Der Bolzenkörper ist verliersicher beispielsweise am jeweiligen Widerlagerkörper gehalten. Vorteilhaft ist der Bolzenkörper an einer Drehlageraufnahme des Widerlagerkörpers drehbar gelagert, wobei zwischen das Bedienelement, insbesondere das Handrad, und die Verliersicherung eine Wandung des Widerlagerkörpers sandwichartig eingreift.

Der Bolzenkörper ist vorzugsweise in eine Schraubaufnahme der bezüglich der Auflagefläche ortsfesten Komponente eingeschraubt oder einschraubbar, beispielsweise in eine Schraubaufnahme an einem oder beiden der Seitenanschlagkörper.

Vorteilhaft ist es, wenn die Befestigungseinrichtung formschlüssig ineinander eingreifende Verdrehsicherungskonturen zum verdrehsicheren Halten der Widerlagerfläche bezüglich der Auflagefläche aufweist.

Eine günstige Variante sieht vor, dass die Verdrehsicherungskonturen mindestens einen sich entlang der Verstellachse erstreckenden Führungsvorsprung der Linearführung, der in eine sich entlang der Verstellachse erstreckende Führungsaufnahme der Linearführung eingreift, umfasst oder dadurch gebildet sind. Beispielsweise sind an dem Seitenanlagekörper, an dem der jeweilige Widerlagerkörper angeordnet ist, und an dem Widerlagerkörper eine Führungsnut und ein Führungsvorsprung angeordnet, der in die Führungsnut eingreift. Bevorzugt ist es, wenn die Führungsnut an der Seitenanschlagfläche des Seitenanlagekörpers angeordnet ist.

Am Boden der Führungsnut ist zweckmäßigerweise eine Schraubaufnahme für den Bolzenkörper vorgesehen.

Ganz allgemein ist festzuhalten, dass vorteilhaft mindestens eine Komponente der Befestigungseinrichtung an der Seitenanlagefläche des Seitenanlagekörpers angeordnet ist, während eine mit dieser zusammenwirkende andere Komponente der Befestigungseinrichtung an dem an dem Seitenanlagekörper anzuordnenden Widerlagerkörper angeordnet ist.

Die an dem Seitenanlagekörper angeordneten Komponenten der Befestigungseinrichtung stehen vorzugsweise nicht vor die Seitenanlagefläche des Seitenanlagekörpers vor.

Weiterhin zweckmäßig ist es, wenn die Werkzeugmaschine eine Verstelleinrichtung zum Verstellen des mindestens einen Widerlagerkörpers zwischen einer Gebrauchsposition, in der die Widerlagerfläche zum Abstützen des Werkstücks neben der Seitenanlagefläche angeordnet ist und vor die Seitenanlagefläche vorsteht, und einer Nichtgebrauchsposition, in der die Widerlagerfläche von der Seitenanlagefläche weg bewegt ist, insbesondere derart, dass die Seitenanlagefläche über ihre gesamte Höhenerstreckung zur Anlage des Werkstücks bereitsteht. In der Nichtgebrauchsposition ist vorzugsweise die gesamte Seitenanlagefläche des Seitenanlagekörpers zur Anlage des Werkstücks frei. Beispielsweise umfasst die Verstelleinrichtung eine Führung für den Widerlagerkörper, die sich von der Seitenanlagefläche des Seitenanlagekörpers zu dessen Oberseite oder zu einer von der Seitenanlagefläche abgewandten Rückseite erstreckt. Weiterhin kann die Verstelleinrichtung beispielweise auch ein Schwenklager umfassen, mit dem der Widerlagerkörper zu der Seitenanlagefläche hin in die Gebrauchsposition und von der Seitenanlagefläche weg in die Nichtgebrauchsposition verstellbar ist. Das Schwenklager umfasst beispielsweise eine Schwenkachse, die parallel zu der Längsachse der Seitenanlagefläche verläuft. Der Widerlagerkörper kann anhand der Verstelleinrichtung beispielsweise von der Seitenanlagefläche weg und somit aus der Gebrauchsposition weg in Richtung der Ruheposition verschwenkbar und/oder verschiebbar sein.

Vorteilhaft ist vorgesehen, dass die Maschinenbasis eine Schwenkbasis aufweist, an der ein Schwenkteil um eine Schwenkachse zur Veränderung einer Relativposition der Werkzeugaufnahme für das Arbeitswerkzeug, zum Beispiel ein Trennwerkzeug, und eine zum Anlegen eines Werkstücks vorgesehenen Seitenanlagefläche schwenkbar gelagert ist. An die Anlagefläche kann das Werkstück beispielsweise seitlich oder mit seiner Unterseite angelegt werden.

Vorteilhaft ist es sowohl beim mindestens einen Seitenanlagekörper als auch bei dem mindestens einen Widerlagerkörper, wenn er beispielsweise plattenartig ist oder durch eine Platte gebildet ist. Während der Seitenanlagekörper vorteilhaft aus Metall besteht, beispielsweise aus Aluminium, besteht der Widerlagerkörper vorzugsweise aus Kunststoff. Der Widerlagerkörper und/oder der Seitenanlagekörper kann durch eine Rippenstruktur verstärkt sein.

Insbesondere ist es vorteilhaft, wenn das Schwenkteil und/oder die Schwenkbasis eine Auflagefläche oder Anlagefläche für das Werkstück bereitstellt. Das Schwenkteil oder die Schwenkbasis oder beide können auch eine Tragbasis für die Antriebsbaugruppe bereitstellen. Beispielweise ist die Antriebsbaugruppe an einem Träger, der vor die Auflagefläche oder Anlagefläche beim Gebrauch der Werkzeugmaschine nach oben vorsteht, angeordnet oder gehalten.

Der Antriebsmotor ist zweckmäßigerweise ein elektrischer Antriebsmotor.

Der Antriebsmotor ist vorteilhaft zu einem Drehantreiben der Werkzeugaufnahme und somit des Trennwerkzeugs vorgesehen. Es ist auch möglich, dass ein Getriebe zwischen Antriebsmotor und Werkzeugaufnahme vorgesehen ist, beispielsweise zu einer Drehzahlveränderung und/oder in Gestalt eines Winkelgetriebes und/oder zur Erzeugung einer oszillierenden Bewegung des Trennwerkzeugs.

Vorteilhaft ist die Werkzeugaufnahme, insbesondere die Antriebsbaugruppe als Ganzes, um eine Kapp-Schwenkachse anhand eines Tiefenschwenklagers oder Kapp-Schwenklagers zu der Auflagefläche für das Werkstück hin und von der Auflagefläche weg schwenkbar. Die Tiefen- oder Kapp-Schwenkachse verläuft bei Gebrauch der Werkzeugmaschine vorzugsweise horizontal. Die Werkzeugmaschine kann dann z.B. eine Kappsäge sein.

Ein vorteilhaftes Konzept, insbesondere bei einer Ausgestaltung der Werkzeugmaschine als Zugsäge oder als Kapp-Zug-Säge sieht vor, dass die Antriebsbaugruppe bezüglich der Schwenkbasis an einer Linearführung zur Durchführung von Längsschnitten mit dem Trennwerkzeug entlang einer Längsachse linear gelagert ist. Die Linearführung umfasst beispielsweise mindestens einen langgestreckten Führungskörper, insbesondere eine Führungsstange oder einen Führungsstab, welcher sich entlang der Längsachse erstreckt. Der mindestens eine langgestreckte Führungskörper, insbesondere die Führungsstange oder der Führungsstab, kann relativ zu der Maschinenbasis der Werkzeugmaschine beweglich sein. Beispielsweise ist dann an einem turmartigen Träger, eine Lageraufnahme für den mindestens einen langgestreckten Führungskörper vorgesehen. Es ist auch möglich, dass der langgestreckte Führungskörper ortsfest an der Maschinenbasis angeordnet ist. Insbesondere ist es bevorzugt, wenn die Antriebsbaugruppe in der Art eines Schlittens relativ zu der Maschinenbasis, insbesondere an einem Träger, der vor die Maschinenbasis nach oben vorsteht, linear beweglich gelagert ist. An dem Schlitten ist zweckmäßigerweise das Tiefenschwenklager oder Kapp-Schwenklager vorgesehen.

Bevorzugt ist es, wenn die Antriebsbaugruppe bezüglich der Maschinenbasis um eine Schräg-Schwenkachse rechtwinkelig anhand eines Schräg-Schwenklagers bezüglich der Maschinenbasis schwenkbar gelagert ist. Somit können beispielsweise Gehrungsschnitte oder Schrägschnitte in das Werkstück durchgeführt werden.

Eine Kombination beider vorgenannter Maßnahmen sieht vor, dass die Antriebsbaugruppe einerseits linear beweglich und andererseits schrägschwenkbar bezüglich der Maschinenbasis gelagert ist. Es ist vorteilhaft, dass ein Träger für die Antriebsbaugruppe anhand des Schrägstelllagers bezüglich der Maschinenbasis um eine Schrägschwenkachse schwenkbar ist und an dem Träger die Linearführung für die Antriebsbaugruppe vorgesehen ist. Beispielsweise steht der mindestens eine lang gestreckte oder stangenartige Führungskörper vor den Träger vor und erstreckt sich insbesondere oberhalb einer Auflagefläche für das Werkstück.

Nachfolgend wird ein Ausführungsbeispiel der Erfindung anhand der Zeichnung erläutert. Es zeigen:

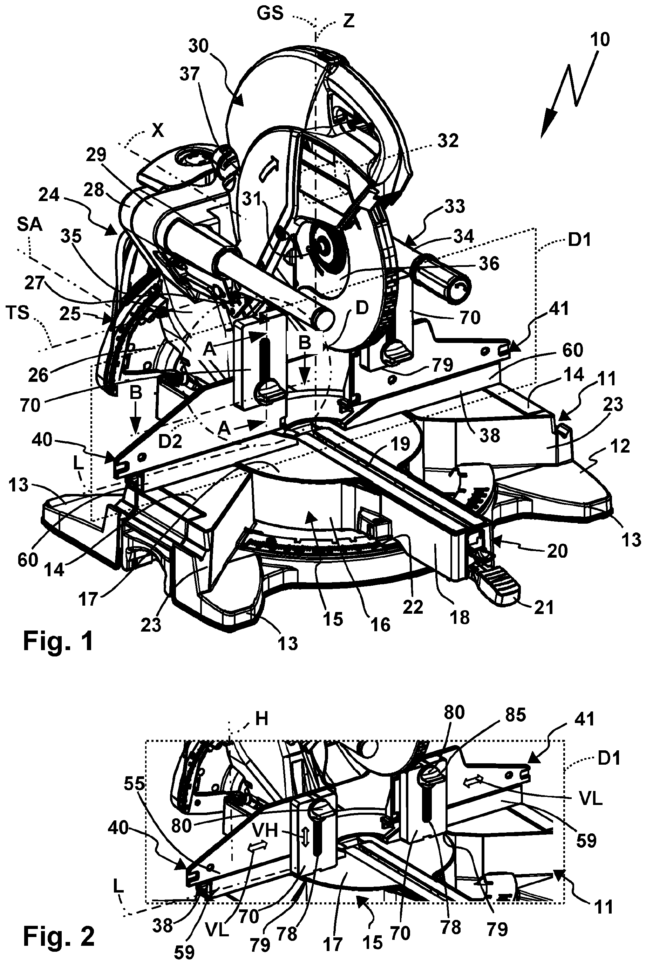

- Figur 1: eine perspektivische Schrägansicht einer Werkzeugmaschine, von der in
- Figur 2: ein Detail D1 dargestellt ist,
- Figur 3: eine Seitenansicht der Werkzeugmaschine gemäß vorstehender Figuren,
- Figur 4: einen Schnitt durch ein Detail D2 der Werkzeugmaschine gemäß Figur 1, etwa entlang einer Schnittlinie A-A,
- Figur 5: das Detail D2, jedoch entlang einer Schnittlinie B-B in Figur 1,
- Figur 6: eine perspektivische Schrägansicht einer Variante der Werkzeugmaschine gemäß vorstehender Figuren, die in
- Figur 7: von hinten dargestellt ist,
- Figur 8: einen Schnitt durch ein Detail D3 aus der Ansicht gemäß Figur 7, etwa entlang einer Schnittlinie C-C in Figur 7,
- Figur 9: eine perspektivische Schrägansicht eines Seitenanschlagkörpers der Werkzeugmaschine gemäß Figuren 5-8,

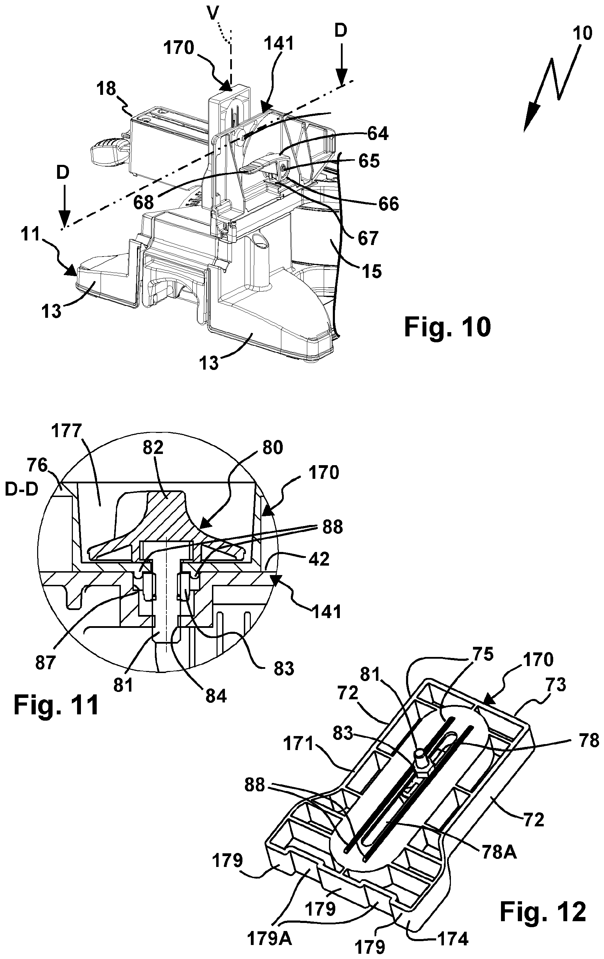

- Figur 10: eine Teilansicht der Werkzeugmaschine gemäß Figur 5 von schräg hinten,
- Figur 11: einen Schnitt durch das Detail D3 gemäß Figur 7, etwa entlang einer Schnittlinie D-D in Figur 7, und
- Figur 12: einen Widerlagerkörper der Werkzeugmaschine gemäß Figuren 5-11 in perspektivischer Schrägansicht auf seine Rückseite.

Eine Werkzeugmaschine 10 weist eine Maschinenbasis 11 auf, die auf einem Untergrund abstellbar ist. Die Werkzeugmaschine 10 ist beispielsweise eine Sägemaschine, die halbstationäre ist, d. h. sie kann an einen jeweiligen Einsatzort mitgenommen werden. Dort kann die Werkzeugmaschine 10 auf dem Untergrund abgestellt und genutzt werden.

An der Maschinenbasis 11 ist eine Antriebsbaugruppe 30 mit einem Antriebsmotor 32 zum Drehantreiben einer Werkzeugaufnahme 31 angeordnet. Der Antriebsmotor 32 treibt die Werkzeugaufnahme 31 direkt oder über ein Getriebe an. An der Werkzeugaufnahme 31 ist ein Arbeitswerkzeug 36, beispielsweise ein Trennwerkzeug oder Sägeblatt, gehalten, sodass mit der Werkzeugmaschine 10 ein Werkstück W bearbeitet, z.B. geschnitten, werden kann.

Die Maschinenbasis 11 weist eine Schwenkbasis 12 auf, an der ein Schwenkteil 15 um eine bei Gebrauch typischerweise vertikale Schwenkachse GS schwenkbar gelagert ist. Die Schwenkbasis 12 weist Füße 13 zum Abstellen auf dem Untergrund sowie Stützabschnitte 23 auf, von denen die Füße 13 abstehen und die an ihrer dem Arbeitswerkzeug 36 oder Antriebsbaugruppe 30 zugewandten Seite, in Betriebslage ihrer Oberseite, Auflageflächen 14 zum Auflegen des Werkstücks W aufweisen. Zwischen den Stützabschnitten 23 ist ein Aufnahmeraum für das Schwenkteil 15, insbesondere einen Schwenkteil-Grundkörper 16, vorgesehen, welches in diesem Aufnahmeraum um die Schwenkachse GS drehbar oder schwenkbar gelagert ist.

Das Schwenkteil 15 weist an seiner dem Arbeitswerkzeug 36 oder der Antriebsbaugruppe 30 zugewandten Seite, in Betriebslage seiner Oberseite, eine Auflagefläche 17 zum Auflegen des Werkstücks W auf, die mit den Auflageflächen 14 fluchtet. Somit kann das Werkstück W auf die Auflageflächen 14 und 17 aufgelegt werden und wird von diesen für die Bearbeitung durch das Arbeitswerkzeug 36 gestützt.

Von dem Schwenkteil-Grundkörper 16 steht ein Betätigungsarm 18 zum Ergreifen durch einen Bediener ab, der eine Bedienhandhabe zum Schwenken-betätigen des Schwenkteils 15 relativ zu der Schwenkbasis 12 bildet. An dem Betätigungsarm 16 sowie der Auflagefläche 17 verläuft ein Schlitz 19, in welchen der Arbeitswerkzeug 36 eintauchen kann.

Weiterhin ist zwischen dem Schwenkteil 15 und der Schwenkbasis 12 eine Schwenk-Fixiereinrichtung 20 vorgesehen, um das Schwenkteil 15 bezüglich der Schwenkbasis 12 in einer oder mehreren vorbestimmten Schwenkpositionen bezüglich der Schwenkachse GS zu fixieren. Die Schwenk-Fixiereinrichtung 20 ist anhand eines Betätigungselements 21 zwischen einer Fixierstellung und einer Lösestellung betätigbar, in welchen das Schwenkteil 15 bezüglich der Schwenkbasis 12 fixiert oder gelöst ist. Zur Anzeige der jeweiligen Schwenkposition ist beispielsweise eine Skala 22 an der Schwenkbasis 12 vorgesehen.

Von der Maschinenbasis 11 steht ein Träger 25 ab, der in Gebrauchslage nach oben vor die Auflageflächen 14, 17 vorsteht.

An dem Träger 25 ist die Antriebsbaugruppe 30, insbesondere die Werkzeugaufnahme 31 und somit das Arbeitswerkzeug 36, anhand einer Lagereinrichtung 24 insbesondere mehrachsig schwenkbar und/oder anhand linear verstellbar gelagert, um das Arbeitswerkzeug 36 relativ zu den Auflageflächen 14, 17 und somit relativ zu dem darauf aufliegenden Werkstück W zu positionieren, um das Werkstück W zu bearbeiten.

An dem Träger 25 ist ein Schrägschwenklager 26 vorgesehen, anhand dessen die Antriebsbaugruppe 30 um eine Schrägschwenkachse SA schwenkbar gelagert ist. Beispielsweise ist ein Tragarm 27 der Antriebsbaugruppe 30 an dem Schwenklager 26 um die Schrägschwenkachse SA schwenkbar gelagert.

Der Tragarm 27 steht vor den Träger 25 vor und trägt an seinem von der Maschinenbasis 11 entfernten Endbereich 28 eine Linearführung 33. Die Linearführung 33 umfasst beispielsweise stabförmige Führungskörper 34, an denen ein Schlitten 33 entlang einer Verstellachse X verschieblich gelagert ist. Das Arbeitswerkzeug 36 ist zwischen den stabförmigen Führungskörpern 34 angeordnet. Das Arbeitswerkzeuge 36 kann anhand der Linearführung 33 entlang der Verstellachse X vor und zurück verlagert werden. Der Schlitz 19 verläuft parallel zur Verstellachse X.

Die Verstellachse X verläuft parallel zur Schrägschwenkachse SA. Die Verstellachse X und die Schrägschwenkachse SA verlaufen bei Gebrauch der Werkzeugmaschine 10 typischerweise horizontal.

Die Verstellachse X und die Schrägschwenkachse SA verlaufen rechtwinkelig zur Schwenkachse GS.

Ein den Antriebsmotor 32 und die Werkzeugaufnahme 31 aufweisendes Antriebsteil 37 könnte an sich ortsfest an dem Schlitten 29 angeordnet sein, sodass das Arbeitswerkzeuge 36 in Bezug auf die Auflageflächen 14, 17 lediglich eine lineare Bewegung durchführen kann.

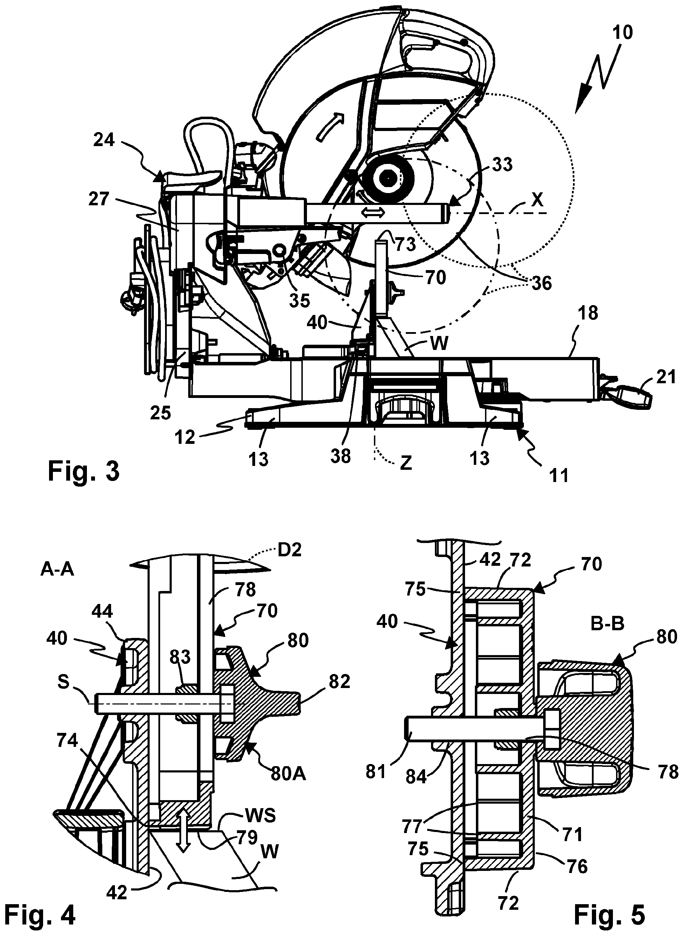

Das Antriebsteil 37 ist jedoch anhand eines Kapp-Schwenklagers oder Tiefenschwenklagers 35 um eine Tiefeneinstellachse TS schwenkbar gelagert, sodass das Arbeitswerkzeug 36 in Bezug auf die Auflageflächen 14, 17 verschiedene Tiefenpositionen einnehmen kann, die in Figur 3 durch gestrichelte Linien dargestellt sind, um dementsprechend in das Werkstück W einzutauchen. Beispielsweise kann das Arbeitswerkzeuge 36 auch in den Schlitz 19 eintauchen.

Die Tiefeneinstellachse TS verläuft rechtwinkelig zu der Schrägschwenkachse SA und/oder rechtwinkelig zu der Verstellachse X und rechtwinkelig zu der Schwenkachse GS.

Anhand der Lagereinrichtung 24 können also Trennschnitte in das Werkstück W in verschiedenen Orientierungen eingebracht werden, wozu jedoch ein fester Halt oder eine feste Abstützung des Werkstücks W an der Werkzeugmaschine 10 erforderlich ist. Zum einen ist das Werkstück W auf der sozusagen zentralen Auflagefläche 17, aber auch auf den die Auflagefläche 17 verlängernden Auflageflächen 14 abstützbar, sodass es sozusagen von unten her optimal abgestützt ist. Zum andern sind aber auch weitere Anlageflächen oder Anschlagflächen vorgesehen, die nachfolgend erläutert werden.

Die Werkzeugmaschine 10 weist zu den Auflageflächen 14, 17 winkelige, vorliegend rechtwinkelige, Seitenanlageflächen 42 auf, die an Seitenanlagekörpern 40, 41 vorgesehen sind. Zwischen den Seitenanlagekörpern 40, 41 ist das Arbeitswerkzeug 26 angeordnet. Die Seitenanlageflächen 42 fluchten miteinander und erstrecken sich entlang einer Längsachse L.

Die Seitenanlagekörper 40, 41 sind oder umfassen beispielsweise Anlageplatten oder Seitenanschlagplatten.

Die Seitenanlageflächen 42 weisen einen Werkzeugabschnitt 43 sowie einen Stützabschnitt 44 auf, wobei der Werkzeugabschnitt 43 sich in Bezug auf eine Höhenrichtung oder Höhenachse H weniger weit vor die Auflageflächen 14, 17 vor erstreckt als der Stützabschnitt 44. Mithin stützt also der Stützabschnitt 44 auch Werkstücke W optimal ab, die im auf die Auflageflächen 14, 17 aufgelegten Zustand weiter vor diese Auflageflächen nach oben vorstehen. Der Werkzeugabschnitt 43 hingegen stellt einen Bewegungsfreiraum für das Arbeitswerkzeug 36 bereit, wenn dieses beispielsweise um die Schrägschwenkachse SA aus seiner in der Zeichnung dargestellten Mittelposition geschwenkt wird, sodass es beispielsweise eine Schrägneigung um bis zu 45° oder mehr bezüglich der Mittelposition hat. In der Mittelposition ist beispielsweise eine Scheidefläche des Arbeitswerkzeuges 36 orthogonal zu den Auflageflächen 14, 17 und orthogonal zu den Seiten Anlageflächen 42.

Die Seitenanlagekörper 40, 42 sind also aneinander entgegengesetzten Seiten des Arbeitswerkzeuges 36 angeordnet oder anordenbar, wobei in einer normalen Sägeposition, die in der Zeichnung nicht dargestellt ist, die Werkzeugabschnitt 43 näher beim Arbeitswerkzeuge 36 sind als die Stützabschnitte 44, sodass eine Abstützung des Werkstücks W abseits oder in größerem Abstand zu dem Arbeitswerkzeuge 36 optimal ist. In Bezug auf die Höhenachse H ist also jeder der Seitenanlagekörper 40, 41 in einem Längsendbereich 45 bezüglich der Längsachse L niedriger als dazu entgegengesetzten Längsendbereichen 46, wo die Stützabschnitte 44 vorgesehen sind.

Die Seitenanlagekörper 40, 41 weisen an den Längsendbereichen 45 zwischen ihrer Oberseite 47 und ihrer Unterseite 50 eine kürzere Erstreckung auf als an den Längsendbereichen 46. Vom Längsendbereich 45 zum Längsendbereich 46 weist die Oberseite 47 beispielsweise einen ansteigenden Schrägabschnitt 48 auf, d. h. die Höhe des jeweiligen Seitenanlagekörpers 41, 42 nimmt von dem Längsendbereich 45 in Richtung des Stützabschnitts 44 zu, insbesondere stetig zu. Im Bereich des Stützabschnitts 44 ist der Abstand zwischen der Oberseite 47 und der Unterseite 50 beispielsweise gleich bleiben, d. h. Schmalseiten des Seitenanlagekörpers 40, 41 an der Unterseite 50 und der Oberseite 47 verlaufen beispielsweise parallel zueinander.

Zwischen dem Werkzeugabschnitt 43 und dem Stützabschnitt 44 kann aber auch eine Stufe 48A vorgesehen sein.

Zur Befestigung der Seitenanlagekörper 40, 41 bezüglich der Anlageflächen 14, 16 und/oder an der Maschinenbasis 11 dienen Halteeinrichtungen 60. Die Halteeinrichtungen 60 sind an der Schwenkbasis 12 der Maschinenbasis 11 befestigt, beispielsweise oberhalb der Auflageflächen 14.

Die Halteeinrichtungen 60 umfassen Haltekörper 38, beispielsweise Profilkörper. Die Haltekörper 38 sind anhand von Schrauben 39 oder dergleichen anderen Befestigungsmitteln an der Maschinenbasis 11 befestigt könnten aber auch einteilig mit der Maschinenbasis 11 sein.

Die Haltekörper 38 erstrecken sich von den Auflageflächen 40 der Schwenkbasis 12 in Richtung des Schwenkteils 15, sodass Längsendbereiche der Haltekörper 38 sich über die Auflagefläche 17 hinweg in Richtung des Schlitzes 19 erstrecken. Die Haltekörper 38 weist eine Basis-Seitenanlagefläche 59 auf, die mit den Seiten Anlageflächen 42 der Seitenanlagekörper 40, 41 fluchtet, wenn diese an den Haltekörpern 38 angeordnet sind.

An den Unterseiten der Seitenanlagekörper 40, 41 ist zum einen eine Unterseiten-Stützfläche 51 vorgesehen, die sich auf den Haltekörpern 38 an ihren von den Auflageflächen 14, 17 abgewandten Seite, in Gebrauchslage ihren Oberseiten, abstützt. Zwischen den Vorsprüngen 57 ist eine Führungsnut 56 einer Linearführung 55 realisiert, die einen Bestandteil der Halteeinrichtung 60 darstellt.

Vor die Unterseiten-Stützfläche 51 der Seitenanlagekörper 40, 41 stehen miteinander fluchtende Führungsvorsprünge 52, 53 vor, die in Führungseingriff mit der Führungsnut 56 bringbar sind, um die Linearführung 55 zu realisieren. Vor die Führungsvorsprünge 52, 53 stehen quer zu deren Längsachse Hintergreifvorsprünge 54 vor, die in Hintergriff mit den zu der Führungsnut 56 vorstehenden Vorsprüngen 57 bringbar sind. Somit bilden diese Vorsprünge 57 Hintergreifkonturen 58 für einen Hintergriff durch die Hintergreifvorsprünge 54 der Seitenanlagekörper 40, 41. Die Führungsvorsprünge 52, 53 und die davon quer oder seitlich abstehenden Hintergreifvorsprünge 54 bilden beispielsweise in Vorderansicht eine T-förmige Struktur.

Anhand der Linearführungen 55 können die Seitenanlagekörper 40, 41 entlang der Längsachse L verstellt werden, sodass beispielsweise weiter vor die Maschinenbasis 11 vorstehende Werkstücke W in größerem Abstand zu der Bearbeitungsebene des Arbeitswerkzeuges 36 an den Seitenanlageflächen 42 abstützbar sind. Beispielsweise können die Seitenanlagekörper 40, 41 zwischen Längspositionen L1 und L2 sowie weiteren, nicht dargestellten Längspositionen entlang der Linearführung 55, insbesondere stufenlos, verstellt werden.

In den jeweiligen Längspositionen ist eine Fixierung der Halteeinrichtung 60 anhand von Klemmmitteln 61 realisierbar. Die Klemmmittel 61 umfassen einen Klemmkörper 62, der anhand eines Zugankers 63 oder eines sonstigen Betätigungsglieds mithilfe eines Betätigungshebels 64 zwischen einer Klemmstellung und einer Lösestellung oder einer Fixierstellung und einer Lösestellung verstellbar ist. Der Klemmkörper 62 ist in der Führungsnut 56 aufgenommen. Der Klemmkörper 62 ist vorzugsweise plattenartig. Der Klemmkörper 62 fluchtet mit den Führungsvorsprüngen 52, 53. Beispielsweise steht der Klemmkörper 62 mit den Hintergreifvorsprüngen 54 etwa fluchtend quer vor den Zuganker 63 vor.

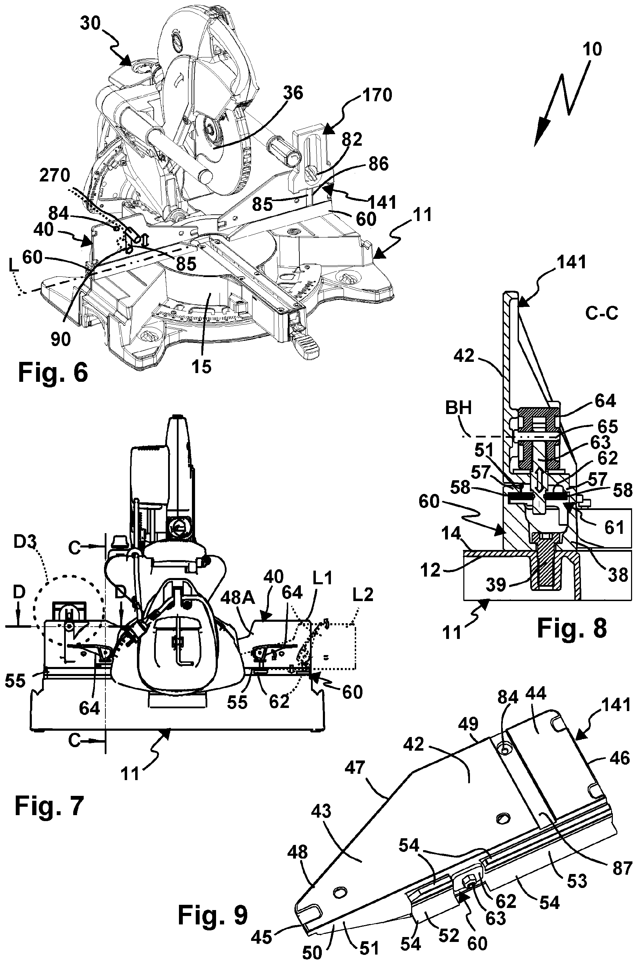

In der Klemmstellung oder Fixierstellung liegt der Klemmkörper 62, der beispielsweise in der Art eines Nutensteins ausgestaltet ist, im Klemmsitz an den Vorsprüngen 57 der Führungsnut 56 an, siehe dazu Figur 8. In der Lösestellung hingegen ist der Klemmsitz aufgehoben, d. h. der Klemmkörper 62 beispielsweise in einem Abstand zu den Vorsprüngen 57 angeordnet, sodass der jeweilige Seitenanlagekörper 40, 41 entlang der Längsachse L anhand der Linearführung 55 verschieblich

Der Betätigungshebel 64 ist um eine Schwenkachse BH anhand eines Achselements 65 an dem jeweiligen Seitenanlagekörper 40, 41 schwenkbar gelagert. Der Betätigungshebel 64 weist einen sich um das Achselement 65 erstreckenden Lagerabschnitt mit einer Lagerfläche 66 auf, die sich an einer bezüglich des jeweiligen Seitenanlagekörpers 40, 41 ortsfesten Stützfläche 67 abstützen kann.

Der Betätigungshebel 64 kann zum Verstellen der Klemmmittel 61 aus der Klemmstellung, in der der Betätigungshebel 64 beispielsweise die in Figur 7 in durchgezogenen Linien dargestellte Position einnimmt, in eine in Figur 7 in gestrichelten Linien dargestellte Position verstellt werden, bei der die Lagerfläche 66 mit geringerer Kraft auf die Stützfläche 67 drückt oder von dieser abgehoben ist, wodurch der Zuganker 63 den Klemmkörper 62 zu einer Bewegung von den Vorsprüngen 57 weg freigeben oder von den Vorsprüngen 57 aktiv weg bewegen kann. In seiner der der Klemmstellung zugeordneten Lage (gestrichelt in Figur 7 dargestellt) nimmt der Betätigungshebel 64 vorzugsweise eine Übertotpunkt-Lage ein.

Anstelle eines jeweiligen Seitenanlagekörpers 40 oder 41 kann aber auch ein etwas modifizierter Seitenanlagekörper zum Einsatz kommen, beispielsweise anstelle des Seitenanlagekörpers 41 ein beispielhaft dargestellter Seitenanlagekörper 141. In Bezug auf die Halteeinrichtung 60 entspricht der Seitenanlagekörper 141 den Seitenanlagekörper 41 und 42. Weiterhin ist der Seitenanlagekörper 141 beispielhaft zu verstehen, d. h. anstelle des Seitenanlagekörpers 40 könnte ein entsprechend geometrisch angepasster, sozusagen linksseitig verwendbarer, Seitenanlagekörper in der Art des Seitenanlagekörpers 141 vorgesehen sein, der jedoch in Bezug auf den Stützabschnitt 44 und den Werkzeugabschnitt 43 spiegelsymmetrisch zum Seitenanlagekörper 141 ist.

Jedenfalls ist es möglich, die Seitenanlagekörper 40, 41, 141 entweder mit näher bei dem Arbeitswerkzeug 36 angeordneten Stützabschnitten 44, wie in der Zeichnung dargestellt, oder mit näher bei dem Arbeitswerkzeug 36 angeordneten Werkzeugabschnitten 43, beispielsweise dann, wenn die nachfolgend erläuterten Widerlagerkörper 70, 170 nicht gebraucht werden.

An den Seitenanlagekörpern 40, 41, 141 können die Widerlagerkörper 70, 170 lösbar befestigt werden, beispielsweise anhand einer Befestigungseinrichtung 80. Die Seitenanlagekörper 70, 170 weisen Widerlagerflächen 79 auf, die im an dem Seitenanlagekörper 40, 41, 141 befestigten Zustand des Widerlagerkörpers 70, 170 den Auflageflächen 14, 17 gegenüberliegen, sodass das Werkstück W sandwichartig zwischen den Widerlagerflächen 79 und den Auflageflächen 14, 17 gehalten ist, beispielsweise in einer Schrägposition gemäß Figur 3. Diese Schrägposition eignet sich insbesondere für die Durchführung sogenannter Crown-Molding-Sägeschnitte. Das Werkstück W ist mit seiner Werkstückschmalseite WS an der Widerlagerfläche 79 dabei optimal abgestützt und kann sich zudem an der Seitenanlagefläche 42 abstützen.

Die Widerlagerkörper 70, 170 weisen Plattenkörper 71, 171 auf. Während die Plattenkörper 71 in Draufsicht rechteckig sind, sind die Plattenkörper 171 der Widerlagerkörper 170 im Bereich ihrer Widerlagerfläche 79 breiter, sodass eine längere oder großzügigere Abstützung des Werkstücks W möglich ist als bei dem Widerlagerkörper 70. Im Bereich der Widerlagerfläche 79 hat der Widerlagerkörper 170 beispielsweise eine Art breiteren Stützfuß oder breiteren Fußabschnitt.

Die Plattenkörper 70, 170 weisen längere Schmalseitenwände 72 auf, die sich zwischen kürzeren Schmalseitenwänden 73, 74, 174 erstrecken. An den Schmalseitenwänden 74, 174 der Plattenkörper 71, 171 sind die Widerlagerflächen 79 angeordnet.

Beim Widerlagerkörper 170 sind im Bereich seiner Widerlagerfläche 79 Aussparungen 179A vorgesehen.

Die Plattenkörper 71, 171 weisen eine Grundwand 76 auf, die durch eine Rippenstruktur 77 verstärkt ist und sich zwischen den jeweiligen Schmalseitenwänden 72, 73, 74, 174 erstrecken. Die von der Grundwand 76 abgewandten Stirnseiten der Schmalseitenwände 72, 73, 74, 174, vorteilhaft auch Stirnseiten von Rippen der Rippenstruktur 77, stellen Stützflächen 75 zur Abstützung an der Seitenanlagefläche 42 bereit. Mithin kann also der jeweilige Widerlagerkörper 70, 170 flächig von der Seitenanlagefläche 42 im Bereich der Stützflächen 75 abgestützt werden.

An der Grundwand 76 ist eine Durchtrittsöffnung 78, vorliegend ein Längsschlitz, vorgesehen, die von einem Bolzenkörper 81 der Befestigungseinrichtung 80 durchdrungen ist.

An dem Bolzenkörper 81 ist ein Handgriff 82 zu einer Drehbetätigung durch einen Bediener angeordnet. Während beim Widerlagerkörper 70 der Handgriff 82 vor die Grundwand 76 vorsteht, taucht er bei dem Widerlagerkörper 170 an eine Aussparungen 177 ein, sodass er nicht vor die Grundwand 76 vorsteht.

Der Bolzenkörper 81 ist durch eine Verliersicherung 83, beispielsweise einen Scheibenkörper, eine Mutter oder dergleichen, an dem Widerlagerkörper 70, 170 verliersicher gehalten.

Der Bolzenkörper 81 kann in eine Schraubaufnahme 84 am jeweiligen Seitenanlagekörper 40, 41, 141 eingeschraubt werden, um den Widerlagerkörper 70, 171 mit dem Seitenanlagekörper 40, 41, 141 zu Verklemmen. Mithin ist die Befestigungseinrichtung 80 als eine Klemmeinrichtung ausgestaltet oder bildet der Bolzenkörper 81 zusammen mit dem Handgriff 82, der an der Grundwand 76 abgestützt ist, ein Klemmmittel 80A zum Verklemmen des Widerlagerkörpers 70, 171 mit dem Seitenanlagekörper40, 41, 141.

Wenn die Schraube bzw. der Bolzenkörper 81 gelöst ist, d. h. die Klemmmittel 80A eine Lösestellung einnehmen, kann der jeweilige Widerlagerkörper 70, 171 entlang der Höhenachse H im Rahmen einer Verstellbewegung VH verstellt werden, um die Widerlagerfläche 79 in Anlage mit dem Werkstück W, insbesondere dessen Schmalseite WS, zu bringen. Mithin kann also die Widerlagerfläche 79 bezüglich des Werkstücks W mit der linearen Verstellbewegung VH bezüglich der Höhenachse H verstellt werden. Quer dazu, d. h. in Richtung der Längsachse L, ist eine Verstellbewegung VL möglich, indem die Klemmmittel 61 gelöst werden. Somit kann also die Widerlagerfläche 79 sowohl in Bezug auf die Längsachse L als auch in Bezug auf die Höhenachse H optimal in Bezug auf das Werkstück W positioniert werden.

Zwischen dem Widerlagerkörper 70, 170 und dem Seitenanlagekörper 40, 41, 141 ist ein Lager 85, beispielsweise ein Linearlager oder Schiebelager und/oder ein Schwenklager, vorgesehen.

Im Falle des Widerlagerkörpers 70 ist das Lager 85 beispielsweise als Linearlager zu nutzen, indem beispielsweise der Widerlagerkörper 70 entlang des eine Lagerausnehmung 78A bildenden Schlitzes, der durch die Durchtrittsöffnung 78 realisiert ist, verschieblich ist. Zudem ist das Lager 85 auch als Schwenklager nutzbar, um beispielsweise nicht nur die kürzeren Schmalseitenwände 73 oder 74 als Widerlagerfläche 79 zu nutzen, sondern auch die längeren Schmalseitenwände 72. Der Widerlagerkörper 70 ist nämlich um die Achse des Bolzenkörpers 81 verdrehbar, wenn die Klemmmittel 80A gelöst sind.

Im Falle des Widerlagerkörpers 171 ist das Lager 85 als Linearlager mit einer Linearführung 86 realisiert. Die Linearführung 86 umfasst eine Führungsaufnahme 87 an dem Seitenanlagekörper 141, beispielsweise eine Führungsnut, in die mindestens ein Führungsvorsprung 88, vorliegend zwei Führungsvorsprünge 88, eingreifen, sodass der Widerlagerkörper 171 in einer zu der Höhenachse H parallelen Achsrichtung entlang einer Verstellachse V linear bezüglich des Seitenanlagekörpers 141 verstellbar ist. Die Führungsvorsprünge 88 erstrecken sich beispielsweise parallel zu der schlitzförmigen Durchtrittsöffnung 78.

Man erkennt in dieser Konstruktion eine besonders günstige Linearführung, nämlich derart, dass die Widerlagerfläche 79 des Widerlagerkörpers 171 exakt parallel zur Längsachse L und exakt parallel zur Höhenachse H anhand der Linearführungen 55, 86 geführt ist.

Zugleich bilden die Führungsaufnahme 87 und die Führungsvorsprünge 88 Verdrehsicherungskonturen 89, die ein Verdrehen des Widerlagerkörpers 171 bezüglich des Seitenanlagekörpers 141 verhindern.

Ein anderes Ausführungsbeispiel kann vorsehen, dass ein Widerlagerkörper, beispielsweise einen Widerlagerkörper 270, an einem Seitenanlagekörper beweglich, jedoch unverlierbar gehalten ist. Beispielsweise ist der Widerlagerkörper 270 bei dem Ausführungsbeispiel gemäß Figur 6 an dem Seitenanlagekörper entlang der Verstellachse V, also in der Ebene der Seitenanlagefläche 42 verschieblich, gelagert angeordnet. Der Widerlagerkörper 270 umfasst beispielsweise einen Stützkörper, der in einer Lageröffnung eines Lagers 85 am Seitenanlagekörper 40 entlang der Verstellachse V verschieblich aufgenommen ist.

Es ist möglich, dass der Widerlagerkörper 270 zwischen der in durchgezogenen Linien dargestellten Gebrauchsposition, in der er vor die Seitenanlagefläche 42 vorsteht, und einer in gestrichelten Linien dargestellten Nichtgebrauchsposition verstellbar ist, in der er von der Seitenanlagefläche 42 weg, beispielsweise hinter diese zurück, verstellt ist und somit bei Nichtgebrauch nicht stört. Somit bildet beispielsweise das Lager 85 zugleich eine Verstelleinrichtung 90 zum Verstellen des Widerlagerkörpers 20 zwischen der Nichtgebrauchsposition und der Gebrauchsposition.

Der Widerlagerkörper 270 kann beispielsweise anhand einer Verklemmung, Verrastung, beispielsweise anhand einer Klemmschraube oder dergleichen, in Bezug auf eine oder mehrere Längspositionen entlang der Verstellachse V an dem Seitenanlagekörper 40 ortsfest festlegbar sein.

Ohne weiteres möglich ist es auch, der Widerlagerkörper 270 ortsfest an der Seitenanlagefläche 42 angeordnet ist, beispielsweise in der in durchgezogenen Linien dargestellten Position.

Zur Verklemmung oder zum Halten eines Widerlagerkörpers an einem Seitenanlagekörper kann auch beispielsweise eine Verklemmung in der Art der Klemmmittel 61 vorgesehen sein. So kann beispielsweise ein an dem Widerlagerkörper beweglich gelagerter Klemmkörper vorgesehen sein, der in der Art eines Nutensteins oder Nutenfolgers in einer Aufnahmenut, beispielsweise in der Art der Führungsnut 56 mit ihren nach innen vorstehenden Vorsprüngen 57, am Seitenanlagekörper aufgenommen ist. Der Klemmkörper kann durch einen Betätigungsmechanismus, zum Beispiel eine Schraube, einen Betätigungshebel in der Art des Betätigungshebels 64 oder dergleichen, in eine Klemmstellung gebracht werden, in der er Vorsprünge der Aufnahmenut hintergreifend und diese klemmend denen Widerlagerkörper im Klemmsitz an dem Seitenanlagekörper hält, oder in eine Lösestellung, in der der Klemmkörper relativ zur Aufnahmenut beweglich ist und somit auch der Widerlagerkörper bezüglich des Seitenanlagekörpers beweglich ist.

Eine derartige Aufnahmenut kann beispielsweise an einer Seitenanlagefläche vorgesehen sein. Dort befindet sich dann der Klemmkörper in der Gebrauchsposition, in der seine Widerlagerfläche der Auflagefläche der Maschinenbasis gegenüber liegt.

Die Aufnahmenut kann sich auch beispielsweise an der Oberseite 47 und zweckmäßigerweise über die Oberseite 47 hinweg zur Rückseite des jeweiligen Seitenanlagekörpers erstrecken, sodass der Klemmkörper in Aufnahmenut geführt ist und der Widerlagerkörper entlang der Bahn der Aufnahmenut von der Seitenanlagefläche zur Oberseite und/oder Rückseite des Seitenanlagekörpers führbar ist, wo er dann eine Nichtgebrauchsposition einnimmt. Der Klemmkörper ist dann beispielsweise als ein Querbolzen oder jedenfalls stabförmiger Klemmkörper ausgestaltet, der der Bahn der Aufnahmenut auch über Krümmungsabschnitte oder Bogenabschnitte oder Winkelabschnitte hinweg folgen kann.

## Patentansprüche

1. Werkzeugmaschine, insbesondere halbstationäre oder mobile Werkzeugmaschine (10) und/oder Sägemaschine, zur Bearbeitung von Werkstücken (W) anhand eines Arbeitswerkzeugs (36), insbesondere eines Trennwerkzeugs oder eines Sägewerkzeugs, wobei die Werkzeugmaschine (10) eine zum Abstellen auf einem Untergrund vorgesehene Maschinenbasis (11) und eine daran angeordnete Antriebsbaugruppe (30) mit einem Antriebsmotor (32) und einer durch den Antriebsmotor (32) antreibbaren Werkzeugaufnahme (31) für das Arbeitswerkzeug (36), insbesondere für ein Trennwerkzeug, aufweist, wobei die Maschinenbasis (11) eine Auflagefläche (14, 17) zum Auflegen des Werkstücks (W) und mindestens einen Seitenanlagekörper (40, 41) mit einer Seitenanlagefläche (42) aufweist, die zu der Auflagefläche (14, 17) winkelig, insbesondere rechtwinkelig ist, und sich entlang einer Längsachse (L) erstreckt, und wobei die Werkzeugmaschine (10) mindestens einen Widerlagerkörper (70, 170) mit einer Widerlagerfläche (79) aufweist, die der Auflagefläche (14, 17) gegenüberliegend anhand einer Halteeinrichtung (60) an der Werkzeugmaschine (10) festlegbar ist, so dass das Werkstück (W) für eine Bearbeitung durch das Arbeitswerkzeug (36), insbesondere zur Herstellung eines Crown-Molding-Schnittes, an der Seitenanlagefläche (42) anliegend zwischen der Auflagefläche (14, 17) und der Widerlagerfläche (79) abgestützt ist, und die Seitenanlagefläche (42) des mindestens einen Seitenanlagekörpers (40, 41) einen Stützabschnitt (44) und einen Werkzeugabschnitt (43) aufweist, wobei die Seitenanlagefläche (42) im Bereich des Stützabschnitts (44) weiter vor die Auflagefläche (14, 17) vorsteht als im Bereich des Werkzeugabschnitts (43), der zur Bereitstellung eines größeren Freiraums für das Arbeitswerkzeug (36) vorgesehen **dadurch gekennzeichnet, dass** der Widerlagerkörper (70, 170) anhand der Halteeinrichtung (60) in mindestens zwei voneinander verschiedenen Längspositionen (L1, L2) bezüglich der Längsachse (L) an der Maschinenbasis (11) lösbar festlegbar ist.

2. Werkzeugmaschine nach Anspruch 1, **dadurch gekennzeichnet, dass** der mindestens eine Widerlagerkörper (70, 170) an dem mindestens einen Seitenanlagekörper (40, 41) angeordnet oder anordenbar ist, insbesondere fest angeordnet ist oder anhand einer Befestigungseinrichtung (80) lösbar befestigt und/oder beweglich gelagert ist.

3. Werkzeugmaschine nach Anspruch 1 oder 2, **dadurch gekennzeichnet, dass** die Halteeinrichtung (60) eine Halteeinrichtung (60) zum Halten des mindestens einen Seitenanschlagkörpers an der Maschinenbasis (11) ist oder aufweist, sodass der Widerlagerkörper (70, 170) an der Maschinenbasis (11) in den mindestens zwei Längspositionen (L1, L2) bezüglich der Längsachse (L) durch Verstellung des Seitenanschlagkörpers lösbar befestigbar ist.

4. Werkzeugmaschine nach einem der vorhergehenden Ansprüche, **dadurch gekennzeichnet, dass** die Halteeinrichtung (60) eine Basis-Seitenanlagefläche (59) aufweist, die mit der Seitenanlagefläche (42) des Seitenanlagekörpers (40, 41) fluchtet, wenn der mindestens eine Seitenanlagekörper (40, 41) an der Halteeinrichtung (60) montiert ist.

5. Werkzeugmaschine nach einem der vorhergehenden Ansprüche, **dadurch gekennzeichnet, dass** die Halteeinrichtung (60) Klemmmittel (61) zum Verklemmen des mindestens einen Seitenanlagekörpers (40, 41) oder des mindestens einen Widerlagerkörpers (70, 170) bezüglich der Maschinenbasis (11) und/oder Formschlusskonturen zum formschlüssigen Halten des mindestens einen Seitenanlagekörpers (40, 41) oder des mindestens einen Widerlagerkörpers (70, 170) bezüglich der Maschinenbasis (11) aufweist und/oder dass die Halteeinrichtung (60) eine Linearführung (55) zu einem linearen Verstellen des mindestens einen Seitenanlagekörpers (40, 41) und/oder des mindestens einen Widerlagerkörpers (70, 170) entlang der Längsachse (L) aufweist.

6. Werkzeugmaschine nach einem der vorhergehenden Ansprüche, **dadurch gekennzeichnet, dass** der mindestens eine Widerlagerkörper (70, 170) im Bereich des Stützabschnitts (44) angeordnet oder anordenbar ist und der mindestens eine Seitenanlagekörper (40, 41) bezüglich der Maschinenbasis (11) und/oder bezüglich der Längsachse (L) zwischen einer ersten Betriebsstellung, in der der Werkzeugabschnitt (43) näher bei dem Arbeitswerkzeug (36) angeordnet ist als der Stützabschnitt (44), und einer zweiten Betriebsstellung verstellbar ist, in der der Stützabschnitt (44) näher bei dem Arbeitswerkzeug (36) angeordnet ist als der Werkzeugabschnitt (43).

7. Werkzeugmaschine nach einem der vorhergehenden Ansprüche, **dadurch gekennzeichnet, dass** sie mindestens zwei Seitenanlagekörper (40, 41) aufweist, die an einander entgegengesetzten Seiten des Arbeitswerkzeugs (36) angeordnet sind, und/oder dass jeder Seitenanlagekörper (40, 41) jeweils anhand einer Halteeinrichtung (60) in mindestens zwei Längspositionen (L1, L2) bezüglich der Längsachse (L) an der Maschinenbasis (11) lösbar befestigbar ist.

8. Werkzeugmaschine nach einem der vorhergehenden Ansprüche, **dadurch gekennzeichnet, dass** die Widerlagerfläche (79) des mindestens einen Widerlagerkörpers (70, 170) oder der Widerlagerkörper (70, 170) als Ganzes anhand einer Befestigungseinrichtung (80) ortsfest an einer bezüglich der Auflagefläche (14, 17) ortsfesten Komponente der Werkzeugmaschine, insbesondere dem mindestens einen Seitenanlagekörper (40, 41), in mindestens einem Höhenabstand, vorzugsweise mindestens zwei voneinander verschiedenen Höhenabständen, bezüglich der Auflagefläche (14, 17) fixierbar ist, wobei sich der Höhenabstand entlang einer Höhenachse (H) erstreckt, die quer, insbesondere rechtwinkelig, zu der Auflagefläche (14, 17) verläuft.

9. Werkzeugmaschine nach Anspruch 8, **dadurch gekennzeichnet, dass** die Befestigungseinrichtung (80) Klemmmittel (80A) zum Verklemmen des mindestens einen Widerlagerkörpers (70, 170) mit der ortsfesten Komponente der Werkzeugmaschine (10) und/oder Formschlusskonturen zum formschlüssigen, insbesondere verdrehsicheren, Halten des mindestens einen Widerlagerkörpers (70, 170) an der ortsfesten Komponente aufweist und/oder dass die Befestigungseinrichtung (80) ein Lager (85), insbesondere ein Linearlager und/oder eine Linearführung (86), zum Verstellen des mindestens einen Widerlagerkörpers (70, 170), insbesondere entlang einer zu der Widerlagerfläche (79) quer orientierten, insbesondere rechtwinkeligen, Verstellachse (V), zwischen mindestens zwei Höhenabständen aufweist, in denen die Widerlagerfläche (79) unterschiedliche Abstände zu der Auflagefläche (14, 17) für das Werkstück (W) aufweist.

10. Werkzeugmaschine nach einem der Ansprüche 8 oder 9, **dadurch gekennzeichnet, dass** die Befestigungseinrichtung (80) einen Bolzenkörper (81) umfasst, der eine Lagerausnehmung (78A), insbesondere Längsausnehmung, des Lagers durchsetzt, und/oder dass die Befestigungseinrichtung (80) einen Bolzenkörper (81) umfasst, der einen Bestandteil von Klemmmitteln (80A) zum Verklemmen des Widerlagerkörpers (70, 170) mit einer bezüglich der Auflagefläche (14, 17) ortsfesten Komponente der Werkzeugmaschine (10) bildet.

11. Werkzeugmaschine nach einem der Ansprüche 8, 9, oder 10, **dadurch gekennzeichnet, dass** die Befestigungseinrichtung (80) formschlüssig ineinander eingreifende Verdrehsicherungskonturen (89) zum verdrehsicheren Halten der Widerlagerfläche (79) bezüglich der Auflagefläche (14, 17) aufweist, wobei vorteilhaft vorgesehen ist, dass die Verdrehsicherungskonturen (89) mindestens einen sich entlang der Verstellachse (V) erstreckenden Führungsvorsprung (88) der Linearführung (86), der in eine sich entlang der Verstellachse (V) erstreckende Führungsaufnahme (87) der Linearführung (86) eingreift, umfasst oder dadurch gebildet sind.

12. Werkzeugmaschine nach einem der vorhergehenden Ansprüche, **dadurch gekennzeichnet, dass** sie eine Verstelleinrichtung (90) zum Verstellen des mindestens einen Widerlagerkörpers (70, 170) zwischen einer Gebrauchsposition, in der die Widerlagerfläche (79) zum Abstützen des Werkstücks (W) neben der Seitenanlagefläche (42) angeordnet ist und vor die Seitenanlagefläche (42) vorsteht, und einer Nichtgebrauchsposition, in der die Widerlagerfläche (79) von der Seitenanlagefläche (42) weg bewegt ist, insbesondere derart, dass die Seitenanlagefläche (42) über ihre gesamte Höhenerstreckung zur Anlage des Werkstücks (W) bereitsteht.

13. Werkzeugmaschine nach einem der vorhergehenden Ansprüche, **dadurch gekennzeichnet, dass** der mindestens eine Seitenanlagekörper (40, 41) und/oder der mindestens eine Widerlagerkörper (70, 170) plattenartig ist oder durch eine Platte gebildet ist.

14. Werkzeugmaschine nach einem der vorhergehenden Ansprüche, **dadurch gekennzeichnet, dass** die Maschinenbasis (11) eine Schwenkbasis (12) aufweist, an der ein Schwenkteil (15) um eine Schwenkachse zur Veränderung einer Relativposition der Werkzeugaufnahme (31) für das Arbeitswerkzeug (36), insbesondere das Trennwerkzeug, und der zum Anlegen eines Werkstücks (W) vorgesehenen Seitenanlagefläche (42) schwenkbar gelagert ist, wobei vorteilhaft das Schwenkteil (15) und/oder die Schwenkbasis (12) die Auflagefläche (14, 17) für das Werkstück (W) und/oder eine Tragbasis für die Antriebsbaugruppe (30) bereitstellt und/oder zweckmäßigerweise die Halteeinrichtung (60) für den mindestens einen Seitenanlagekörper (40, 41) bezüglich der Schwenkbasis (12) ortsfest ist oder an der Schwenkbasis (12) angeordnet ist.

15. Werkzeugmaschine nach einem der vorhergehenden Ansprüche, **dadurch gekennzeichnet, dass** die Antriebsbaugruppe (30) bezüglich der Maschinenbasis (11) an einer Linearführung (33) zur Durchführung von Längsschnitten mit dem Arbeitswerkzeug (36), insbesondere dem Trennwerkzeug, linear gelagert ist und/oder um eine Schrägschwenkachse (SA) bezüglich der Maschinenbasis (11) schwenkbar gelagert ist und/oder anhand eines Tiefenschwenklagers (35) oder Kapp-Schwenklagers zu der zum Auflegen eines Werkstücks (W) vorgesehenen Werkstück-Auflagefläche (14, 17) hin und von dieser weg schwenkbar gelagert ist.

## Claims

1. Machine tool, in particular a semi-stationary or mobile machine tool (10) and/or sawing machine, for machining workpieces (W) using a working tool (36), in particular a separating tool or a sawing tool, wherein the machine tool (10) comprises a machine base (11) for setting down on a ground surface and a drive assembly (30) arranged thereon with a drive motor (32) and a tool receptacle (31) drivable by the drive motor (32) for the working tool (36), in particular for a separating tool, wherein the machine base (11) comprises a support surface (14, 17) for supporting the workpiece (W) and comprises at least one side contact body (40, 41) with a side contact surface (42), which is at an angle to the support surface (14, 17), in particular perpendicular, and extends along a longitudinal axis (L), wherein the machine tool (10) comprises at least one abutment body (70, 170) with an abutment surface (79), which can be fixed opposite the support surface (14, 17) by means of a holding device (60) on the machine tool (10), so that the workpiece (W) for machining by the working tool (36), in particular for the production of a crown-moulding cut, is supported adjacent to the side contact surface (42) between the support surface (14, 17) and the abutment surface (79), and the side contact surface (42) of the at least one side contact body (40, 41) comprises a support section (44) and a tool section (43), wherein the side contact surface (42) protrudes further in front of the support surface (14, 17) in the region of the support section (44) than in the region of the tool section (43), which is provided for making a larger clearance available for the working tool, **characterised in that** the abutment body (70, 170) can be releasably fixed on the machine base (11) using the holding device (60), in at least two different longitudinal positions (L1, L2) with respect to the longitudinal axis (L).

2. Machine tool according to claim 1, **characterised in that** the at least one abutment body (70, 170) is arranged or can be arranged on the at least one side contact body (40, 41), in particular fixedly arranged or releasably secured and/or movably mounted by means of a fixing device (80).

3. Machine tool according to claim 1 or 2, **characterised in that** the holding device (60) is or comprises a holding device (60) for holding the at least one side stop body on the machine base (11), so that the abutment body (70, 170) is releasably fixable on the machine base (11) in the at least two longitudinal positions (L1, L2) with respect to the longitudinal axis (L) by adjusting of the side stop body.

4. Machine tool according to any one of the preceding claims, **characterised in that** the holding device (60) comprises a base side contact surface (59), which is aligned with the side contact surface (42) of the side contact body (40, 41) when the at least one side contact body (40, 41) is mounted on the holding device (60).

5. Machine tool according to any one of the preceding claims, **characterised in that** the holding device (60) comprises clamping means (61) for clamping the at least one side contact body (40, 41) or the at least one abutment body (70, 170) with respect to the machine base (11) and/or positive engagement contours for positively holding the at least one side contact body (40, 41) or the at least one abutment body (70, 170) with respect to the machine base (11) and/or that the holding device (60) comprises a linear guide (55) for a linear adjustment along the longitudinal axis (L) of the at least one side contact body (40, 41) and/or the at least one abutment body (70, 170).

6. Machine tool according to any one of the preceding claims, **characterised in that** the at least one abutment body (70, 170) is arranged or can be arranged in the region of the support section (44) and the at least one side contact body (40, 41) is adjustable with respect to the machine base (11) and/or with respect to the longitudinal axis (L) between a first operating position, in which the tool section (43) is arranged closer to the working tool (36) than the support section (44), and a second operating position, in which the support section (44) is arranged closer to the working tool (36) than the tool section (43).

7. Machine tool according to any one of the preceding claims, **characterised in that** it comprises at least two side contact bodies (40, 41) which are arranged on opposite sides of the working tool (36) and/or that each side contact body (40, 41) respectively is releasably affixable on the machine base (11) by means of a holding device (60), in at least two longitudinal positions (L1, L2) with respect to the longitudinal axis (L).

8. Machine tool according to any one of the preceding claims, **characterised in that** the abutment surface (79) of the at least one abutment body (70, 170) or the abutment body (70, 170) as a whole is fixable in relation to the support surface (14, 17) by means of a fixing device (80) fixed to a component of the machine tool, which is stationary relative to the support surface (14, 17), in particular the at least one side contact body (40, 41), such that it is fixable in at least one vertical distance, preferably at least two mutually different vertical distances, wherein the vertical distance extends along a vertical axis (H) which extends transversely, in particular perpendicular, to the support surface (14, 17).

9. Machine tool according to claim 8, **characterised in that** the fixing device (80) comprises clamping means (80A) for clamping the at least one abutment body (70, 170) with the stationary component of the machine tool (10) and/or positive engagement contours for the positive, in particular non-rotating, holding of the at least one abutment body (70, 170) on the stationary component and/or that the fixing device (80) comprises a bearing (85), in particular a linear bearing and/or a linear guide (86), for adjusting the at least one abutment body (70, 170) between at least two vertical distances, in particular along an adjustment axis (V) transverse, in particular perpendicular, to the abutment surface (79), such that in these vertical distances the abutment surface (79) has different distances to the support surface (14, 17) for the workpiece (W).

10. Machine tool according to claim 8 or 9, **characterised in that** the fixing device (80) comprises a bolt body (81) passing through a bearing recess (78A), in particular a longitudinal recess, of the bearing and/or that the fixing device (80) comprises a bolt body (81), which forms a part of a clamping means (80A) for clamping the abutment body (70, 170) to a component of the machine tool (10), which is stationary with respect to the support surface (14, 17)

11. Machine tool according to any one of claims 8, 9 or 10, **characterised in that** the fixing device (80) comprises positively engaging interlocking anti-rotation contours (89) for non-rotatably holding the abutment surface (79) with respect to the support surface (14, 17), wherein it is advantageously provided that the anti-rotation contours (89) comprise or are formed by at least one guide projection (88) of the linear guide (86) extending along the adjustment axis (V), which engages in a guide receptacle (87) of the linear guide (86) extending along the adjustment axis (V).

12. Machine tool according to any one of the preceding claims, **characterised in that** it comprises an adjustment device (90) for adjusting the at least one abutment body (70, 170) between a use position, in which the abutment surface (79) for supporting the workpiece (W) is arranged next to the side contact surface (42) and protrudes in front of the side contact surface (42), and a non-use position in which the abutment surface (79) is moved away from the side contact surface (42), in particular such that the side contact surface (42) is ready over its entire vertical extension for attaching the workpiece (W).

13. Machine tool according to any one of the preceding claims, **characterised in that** the at least one side contact body (40, 41) and/or the at least one abutment body (70, 170) is plate-like or is formed by a plate.

14. Machine tool according to any one of the preceding claims, **characterised in that** the machine base (11) comprises a pivot base (12) on which a pivot member (15) is pivotably mounted about a pivot axis for changing a relative position of the tool receptacle (31) for the working tool (36), in particular the separating tool, and of the side contact surface (42) provided for attaching a workpiece (W), wherein the pivot member (15) and/or the pivot base (12) advantageously provides the support surface (14, 17) for the workpiece (W) and/or provides a support base for the drive assembly (30) and/or expediently the holding device (60) is stationary with respect to the pivot base (12) for the at least one side contact body (40, 41) or is arranged on the pivot base (12).

15. Machine tool according to any one of the preceding claims, **characterised in that** the drive assembly (30) is linearly mounted with respect to the machine base (11) on a linear guide (33) for performing longitudinal cuts with the working tool (36), in particular the separating tool, and/or is pivotably mounted about an oblique pivot axis (SA) with respect to the machine base (11) and/or by means of a depth pivot bearing (35) or mitre pivot bearing is mounted to pivot toward and away from the workpiece support surface (14, 17), which is provided for supporting the workpiece (W).

## Revendications

1. Machine-outil, en particulier machine-outil (10) semi-stationnaire ou mobile et/ou scie mécanique, destinée à usiner des pièces (W) à l'aide d'un outil de travail (36), en particulier d'un outil de coupe ou d'un outil de sciage, dans laquelle la machine-outil (10) présente un socle de machine (11) prévu pour être déposé sur un support et un module d'entraînement (30) disposé dessus avec un moteur d'entraînement (32) et un logement d'outil (31) pouvant être entraîné par le moteur d'entraînement (32) pour l'outil de travail (36), en particulier pour un outil de coupe, dans laquelle le socle de machine (11) présente une surface de réception (14, 17) pour réceptionner la pièce (W) et au moins un corps d'appui latéral (40, 41) avec une surface d'appui latérale (42) qui forme un angle, en particulier un angle droit, avec la surface de réception (14, 17), et s'étend le long d'un axe longitudinal (L), et dans laquelle la machine-outil (10) présente au moins un corps de butée (70, 170) avec une surface de butée (79), qui peut être immobilisée sur la machine-outil (10) en vis-à-vis de la surface de réception (14, 17) à l'aide d'un dispositif de maintien (60) de sorte que la pièce (W) est soutenue en prenant appui sur la surface d'appui latérale (42) entre la surface de réception (14, 17) et la surface de butée (79) pour un usinage par l'outil de travail (36), en particulier pour la réalisation d'une coupe en moulure couronnée, et
la surface d'appui latérale (42) de l'au moins un corps d'appui latéral (40, 41) présente une section d'appui (44) et une section d'outil (43), dans laquelle la surface d'appui latérale (42) fait davantage saillie devant la surface de réception (14, 17) dans la zone de la section d'appui (44) que dans la zone de la section d'outil (43), qui est prévue pour fournir un espace dégagé plus grand pour l'outil de travail (36), **caractérisée en ce que** le corps de butée (70, 170) peut être immobilisé de manière amovible sur le socle de machine (11) à l'aide du dispositif de maintien (60) dans au moins deux positions longitudinales (L1, L2) différentes l'une de l'autre par rapport à l'axe longitudinal (L).

2. Machine-outil selon la revendication 1, **caractérisée en ce que** l'au moins un corps de butée (70, 170) est disposé ou peut être disposé sur l'au moins un corps d'appui latéral (40, 41), en particulier est disposé de manière fixe ou est fixé de manière amovible et/ou est monté de manière mobile à l'aide d'un dispositif de fixation (80).

3. Machine-outil selon la revendication 1 ou 2, **caractérisée en ce que** le dispositif de maintien (60) est ou présente un dispositif de maintien (60) pour maintenir l'au moins un corps d'arrêt latéral sur le socle de machine (11) si bien que le corps de butée (70, 170) peut être fixé de manière amovible en ajustant le corps d'arrêt latéral sur le socle de machine (11) dans les au moins deux positions longitudinales (L1, L2) par rapport à l'axe longitudinal (L).

4. Machine-outil selon l'une quelconque des revendications précédentes, **caractérisée en ce que** le dispositif de maintien (60) présente une surface d'appui latérale de socle (59), qui est alignée avec la surface d'appui latérale (42) du corps d'appui latéral (40, 41) lorsque l'au moins un corps d'appui latéral (40, 41) est monté sur le dispositif de maintien (60).

5. Machine-outil selon l'une quelconque des revendications précédentes, **caractérisée en ce que** le dispositif de maintien (60) présente des moyens de serrage (61) pour assembler par serrage l'au moins un corps d'appui latéral (40, 41) ou l'au moins un corps de butée (70, 170) par rapport au socle de machine (11) et/ou des contours à complémentarité de forme pour maintenir par complémentarité de forme l'au moins un corps d'appui latéral (40, 41) ou l'au moins un corps de butée (70, 170) par rapport au socle de machine (11), et/ou que le dispositif de maintien (60) présente un guidage linéaire (55) pour ajuster de manière linéaire l'au moins un corps d'appui latéral (40, 41) et/ou l'au moins un corps de butée (70, 170) le long de l'axe longitudinal (L).

6. Machine-outil selon l'une quelconque des revendications précédentes, **caractérisée en ce que** l'au moins un corps de butée (70, 170) est disposé ou peut être disposé dans la zone de la section d'appui (44) et l'au moins un corps d'appui latéral (40, 41) peut être ajusté par rapport au socle de machine (11) et/ou par rapport à l'axe longitudinal (L) entre une première position de fonctionnement, dans laquelle la section d'outil (43) est disposée davantage à proximité de l'outil de travail (36) que la section d'appui (44), et une deuxième position de fonctionnement, dans laquelle la section d'appui (44) est disposée davantage à proximité de l'outil de travail (36) que la section d'outil (43).

7. Machine-outil selon l'une quelconque des revendications précédentes, **caractérisée en ce qu'**elle présente au moins deux corps d'appui latéraux (40, 41), qui sont disposés sur des côtés opposés les uns aux autres de l'outil de travail (36), et/ou que chaque corps d'appui latéral (40, 41) peut être fixé de manière amovible sur le socle de machine (11) respectivement à l'aide d'un dispositif de maintien (60) dans au moins deux positions longitudinales (L1, L2) par rapport à l'axe longitudinal (L).

8. Machine-outil selon l'une quelconque des revendications précédentes, **caractérisée en ce que** la surface de butée (79) de l'au moins un corps de butée (70, 170) ou le corps de butée (70, 170) peut être bloquée ou bloqué comme un tout à l'aide d'un dispositif de fixation (80) de manière stationnaire sur un composant de la machine-outil stationnaire par rapport à la surface de réception (14, 17), en particulier sur l'au moins un corps d'appui latéral (40, 41), à au moins une distance en hauteur, de préférence à au moins deux distances en hauteur différentes l'une de l'autre, par rapport à la surface de réception (14, 17), dans laquelle la distance en hauteur s'étend le long d'un axe en hauteur (H), qui s'étend de manière transversale, en particulier à angle droit, par rapport à la surface de réception (14, 17).

9. Machine-outil selon la revendication 8, **caractérisée en ce que** le dispositif de fixation (80) présente des moyens de serrage (80A) pour assembler par serrage l'au moins un corps de butée (70, 170) au composant stationnaire de la machine-outil (10) et/ou des contours à complémentarité de forme pour maintenir par complémentarité de forme, en particulier de manière à empêcher toute rotation, l'au moins un corps de butée (70, 170) sur le composant stationnaire, et/ou que le dispositif de fixation (80) présente un palier (85), en particulier un palier linéaire et/ou un guidage linéaire (86), pour ajuster l'au moins un corps de butée (70, 170), en particulier le long d'un axe d'ajustement (V) orienté de manière transversale, en particulier à angle droit, par rapport à la surface de butée (79), entre au moins deux distances en hauteur, auxquelles la surface de butée (79) présente des distances différentes par rapport à la surface de réception (14, 17) pour la pièce (W).

10. Machine-outil selon l'une quelconque des revendications 8 ou 9, **caractérisée en ce que** le dispositif de fixation (80) comprend un corps de boulon (81), qui traverse un évidement de palier (78A), en particulier un évidement longitudinal, du palier, et/ou que le dispositif de fixation (80) comprend un corps de boulon (81), qui forme un élément constitutif de moyens de serrage (80A) pour assembler par serrage le corps de butée (70, 170) à un composant de la machine-outil (10) stationnaire par rapport à la surface de réception (14, 17).

11. Machine-outil selon l'une quelconque des revendications 8, 9 ou 10, **caractérisée en ce que** le dispositif de fixation (80) présente des contours anti-rotation (89) s'imbriquant par complémentarité de forme les uns dans les autres pour maintenir, tout en empêchant toute rotation, la surface de butée (79) par rapport à la surface de réception (14, 17), dans laquelle il est prévu de manière avantageuse que les contours anti-rotation (89) comprennent au moins une partie faisant saillie de guidage (88), s'étendant le long de l'axe d'ajustement (V), du guidage linéaire (86), qui vient en prise avec un logement de guidage (87), s'étendant le long de l'axe d'ajustement (V), du guidage linéaire (86) ou en sont formés.

12. Machine-outil selon l'une quelconque des revendications précédentes, **caractérisée en ce qu'**elle présente un dispositif d'ajustement (90) pour ajuster l'au moins un corps de butée (70, 170) entre une position d'utilisation, dans laquelle la surface de butée (79) est disposée pour soutenir la pièce (W) à côté de la surface d'appui latérale (42) et fait saillie devant la surface d'appui latérale (42), et une position de non-utilisation, dans laquelle la surface de butée (79) est déplacée de manière à s'éloigner de la surface d'appui latérale (42), en particulier de telle manière que la surface d'appui latérale (42) se tient prête sur la totalité de son extension en hauteur pour l'appui de la pièce (W).

13. Machine-outil selon l'une quelconque des revendications précédentes, **caractérisée en ce que** l'au moins un corps d'appui latéral (40, 41) et/ou l'au moins un corps de butée (70, 170) sont de type plaque ou sont formés par une plaque.

14. Machine-outil selon l'une quelconque des revendications précédentes, **caractérisée en ce que** le socle de machine (11) présente un socle pivotant (12), sur lequel une partie pivotante (15) est montée de manière à pouvoir pivoter autour d'un axe de pivotement pour modifier une position relative du logement d'outil (31) pour l'outil de travail (36), en particulier l'outil de coupe, et de la surface d'appui latérale (42) prévue pour placer une pièce (W), dans laquelle la partie pivotante (15) et/ou le socle pivotant (12) fournissent de manière avantageuse la surface de réception (14, 17) pour la pièce (W) et/ou un socle de support pour le module d'entraînement (30) et/ou le dispositif de maintien (60) pour l'au moins un corps d'appui latéral (40, 41) est stationnaire de manière opportune par rapport au socle pivotant (12) ou est disposé sur le socle pivotant (12).

15. Machine-outil selon l'une quelconque des revendications précédentes, **caractérisée en ce que** le module d'entraînement (30) est monté de manière linéaire par rapport au socle de machine (11) sur un guidage linéaire (33) pour effectuer des coupes longitudinales avec l'outil de travail (36), en particulier l'outil de coupe, et/ou est monté de manière à pouvoir pivoter autour d'un axe de pivotement oblique (SA) par rapport au socle de machine (11) et/ou est monté de manière à pouvoir pivoter à l'aide d'un palier de pivotement en profondeur (35) ou d'un palier pivotant oscillant par rapport à la surface de réception (14, 17) de pièce prévue pour placer une pièce (W) vers celle-ci et de manière à s'en éloigner.
